# EUROPEAN PATENT APPLICATION

(11) **EP 1 150 215 A2**
(43) Date of publication of application: **31.10.2001**
(21) Application number: 01303204.0
(22) Date of filing: 04.04.2001
(51) Int. Cl.: G06F 17/30

(54) **A method of annotating an image**

(30) Priority: 28.04.2000 AU PQ717700
(71) Applicant: CANON KABUSHIKI KAISHA, Tokyo (JP)
(72) Inventor: Lloyd-Jones, Daniel John, Northbridge, New South Wales 2063 (AU); Lennon, Alison Joan, Balmain, New South Wales 2041 (AU)
(74) Representative: Beresford, Keith Denis Lewis

(57) **Abstract**

A method and apparatus for annotating an image (407) is disclosed. The image (407) and a plurality of icons (403) are displayed such that each icon is associated with metadata. At least one of the icons is selected depending on at least one subject of the image (407) and the metadata associated with the selected icon is stored as an annotation of the subject of the image.

## Description

### Technical Field of the Invention

The present invention relates generally to the field of multi-media and in particular, to a method and apparatus for generating metadata based on multi-media content. The invention also relates to a computer program product including a computer readable medium having recorded thereon a computer program for generating metadata based on multi-media content.

### Background Art

The popularity of digital photography is ever increasing as digital cameras become more accessible and the production and editing capabilities of digital images improve. Further, the Internet use of digital images is increasing rapidly. Large databases of digital images are being assembled for both personal and commercial use. As with conventional photography, the need to annotate and catalogue the ever increasing number of digital images is of paramount importance in order to allow ease of access and use. One method of facilitating the annotation of digital images is to generate "metadata" with the image. Metadata is information about the content of digital images or even video. For example, an image depicting a beach scene could include a short textual description such as "a picture of a beach", the name of a person in the image or a date and time that the image was captured. Many Internet image search sites search on metadata content descriptions to locate digital images for display.

Some digital cameras automatically generate a date and time, which is generally included in the file name of a digital image when the image is stored and/or displayed (e.g. 12Nov_1.jpg). However, the automatically generated date and time says nothing about the content and/or event depicted by the digital image and therefore provides only limited assistance in annotating, cataloguing and searching for the digital image.

Conventionally, a text entry method of generating metadata for digital images has been used where a person sorts through a database of digital images, using a computer, and stores with each digital image a short textual label indicating a subject and/or an event depicted by each digital image. However, the above conventional method is very labour intensive and thus time consuming.

The problem is further exacerbated when a person needs to supply a selection of digital images of a particular event and/or subject by e-mail (electronic mail). This involves viewing all of the images in a database, selecting the appropriate images and then grouping the images together by attaching them one-by-one to an e-mail for sending.

### Disclosure of the Invention

It is an object of the present invention to substantially overcome, or at least ameliorate, one or more disadvantages of existing arrangements.

According to one aspect of the present invention there is provided a method a method of annotating an image, said method comprising the steps of:
displaying the image and a plurality of icons, each icon being associated with metadata;
selecting at least one of said icons depending on at least one subject of the image; and
storing the metadata associated with said selected icon as an annotation of the subject of the image.

According to another aspect of the present invention there is provided an apparatus for annotating an image, said apparatus comprising:
display means for displaying the image and a plurality of icons, each icon being associated with metadata;
selection means for selecting at least one of said icons depending on at least one subject of the image; and
storage means for storing the metadata associated with said selected icon as an annotation of the subject of the image.

### Brief Description of the Drawings

A number of embodiments of the present invention will now be described with reference to the drawings, in which:
Fig. 1 is a flow diagram showing a method of annotating an image using metadata, in accordance with a preferred embodiment of the present invention;
Fig. 2 is a schematic block diagram of a general purpose computer upon which arrangements described can be practiced; and
Fig. 3 shows an example format of an XML file;
Fig. 4 shows a user interface that can be used to perform the method of Fig. 1;
Fig. 5 shows the user interface of Fig. 4 with bounding boxes overlaying the image according to the method of Fig. 1; and
Fig. 6 is a flow diagram showing a method of annotating an image using metadata according to a further embodiment of the present invention.

### Detailed Description including Best Mode

Where reference is made in any one or more of the accompanying drawings to steps and/or features, which have the same reference numerals, those steps and/or features have for the purposes of this description the same function(s) or operation(s), unless the contrary intention appears.

The principles of the method described herein have general applicability to generating metadata. However, for ease of explanation, the steps of the method are described with reference to digital images. However, it is not intended that the present invention be limited to the described method. For example, the invention may have application to generating metadata regarding the subject of a document, a video clip or any computer generated page.

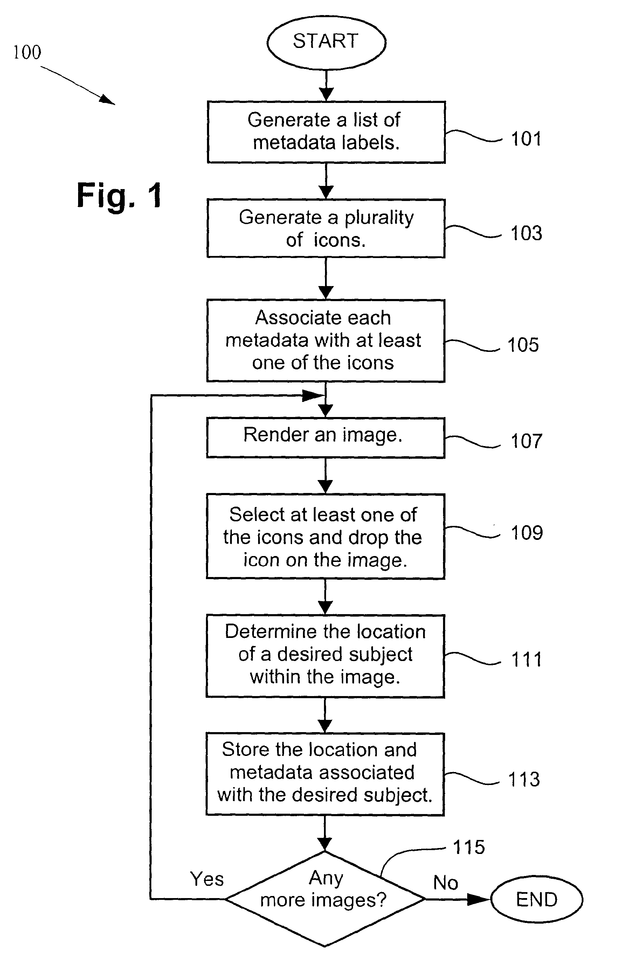

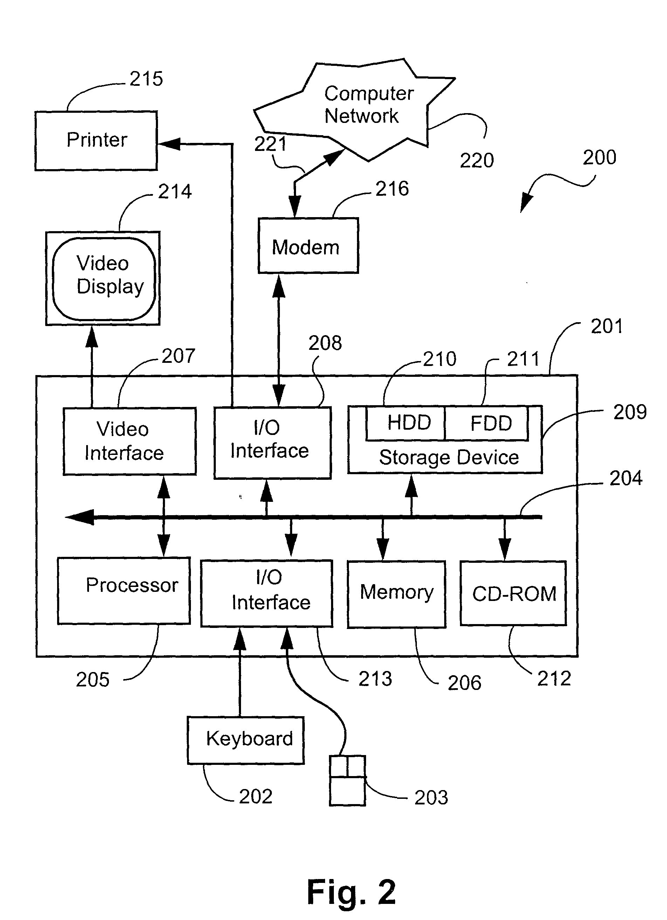

Fig. 1 is a flowchart 100 showing a method of annotating an image using metadata, in accordance with the preferred embodiment of the present invention. The method of Fig. 1 is preferably practiced using a conventional general-purpose computer system 200, such as that shown in Fig. 2 wherein the processes of Fig. 1 may be implemented as software, such as an application program executing within the computer system 200. In particular, the steps of the method of annotating an image using metadata, are effected by instructions in the software that are carried out by the computer. The software may be divided into two separate parts; one part for carrying out the annotation method; and another part to manage the user interface between the method and the user. The software may be stored in a computer readable medium, including the storage devices described below, for example. The software is loaded into the computer from the computer readable medium, and then executed by the computer. A computer readable medium having such software or computer program recorded on it is a computer program product. The use of the computer program product in the computer preferably effects an advantageous apparatus for annotating an image using metadata in accordance with the embodiments of the invention.

The computer system 200 comprises a computer module 201, input devices such as a keyboard 202 and mouse 203, output devices including a printer 215 and a display device 214. A Modulator-Demodulator (Modem) transceiver device 216 is used by the computer module 201 for communicating to and from a communications network 220, for example connectable via a telephone line 221 or other functional medium. The modem 216 can be used to obtain access to the Internet, and other network systems, such as a Local Area Network (LAN) or a Wide Area Network (WAN).

The computer module 201 typically includes at least one processor unit 205, a memory unit 206, for example formed from semiconductor random access memory (RAM) and read only memory (ROM), input/output (I/O) interfaces including a video interface 207, and an I/O interface 213 for the keyboard 202 and mouse 203 and optionally a joystick (not illustrated), and an interface 208 for the modem 216. A storage device 209 is provided and typically includes a hard disk drive 210 and a floppy disk drive 211. A magnetic tape drive (not illustrated) may also be used. A CD-ROM drive 212 is typically provided as a non-volatile source of data. The components 205 to 213 of the computer module 201, typically communicate via an interconnected bus 204 and in a manner which results in a conventional mode of operation of the computer system 200 known to those in the relevant art. Examples of computers on which the embodiments can be practised include IBM-PC's and compatibles, Sun Sparcstations or alike computer systems evolved therefrom.

Typically, the application program of the preferred embodiment is resident on the hard disk drive 210 and read and controlled in its execution by the processor 205. Intermediate storage of the program and any data fetched from the network 220 may be accomplished using the semiconductor memory 206, possibly in concert with the hard disk drive 210. In some instances, the application program may be supplied to the user encoded on a CD-ROM or floppy disk and read via the corresponding drive 212 or 211, or alternatively may be read by the user from the network 220 via the modem device 216. Still further, the software can also be loaded into the computer system 200 from other computer readable medium including magnetic tape, a ROM or integrated circuit, a magneto-optical disk, a radio or infra-red transmission channel between the computer module 201 and another device, a computer readable card such as a PCMCIA card, and the Internet and Intranets including e-mail transmissions and information recorded on websites and the like. An e-mail transmission is an electronic message sent from one computer user to another over a digital network such as the Internet or Intranet. The message is generally sent using an e-mail application program and is generally in the form of a text file containing a textual message. However, an e-mail transmission can include other file types such as .jpg and .tif files, for example. The foregoing is merely exemplary of relevant computer readable mediums. Other computer readable mediums may be practiced without departing from the scope and spirit of the invention.

The method of annotating an image using metadata can alternatively be implemented in dedicated hardware such as one or more integrated circuits performing the functions or sub functions of Fig. 1. Such dedicated hardware may include graphic processors, digital signal processors, or one or more microprocessors and associated memories.

The method of annotating an image using metadata, can now be described with reference to the flowchart 100 of Fig. 1, where the method is performed using the computer system 200. The process begins at step 101, where a list of metadata labels is provided. The list of metadata labels is preferably provided automatically. For example, a list of people's names can be provided automatically by extracting the names from an existing database of names, such as an e-mail address book. In this instance, names, associated e-mail addresses and other personal information can be extracted from the database. Alternatively, a list of metadata labels can be manually generated using any known software database application, or metadata labels can be manually inputted by the user using the keyboard 202. At the next step 103, a plurality of icons are provided. Preferably, the number of icons is equal to the number of metadata labels in the list of metadata labels and the icons are preferably displayed on the video display 214. The process continues at the next step 105, where each label in the list of metadata labels is associated with at least one of the generated icons. For example, one of the icons could be associated with the name "Jenny Smith" which was included in an imported e-mail address book. The association of each metadata label with an icon can be carried out arbitrarily. However, preferably each metadata label is associated with a generated icon.

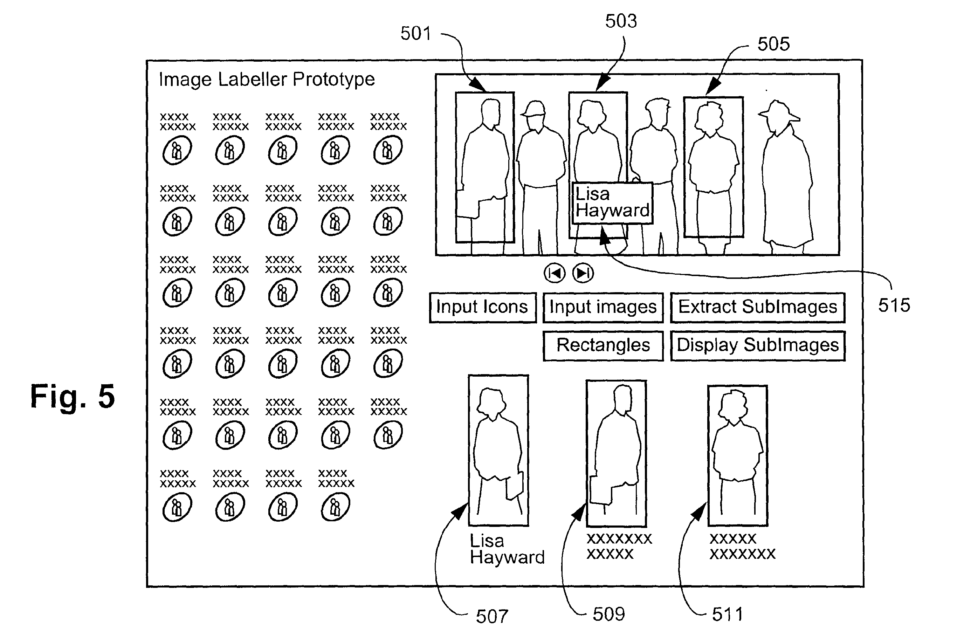

At the next step 107, a digital image is rendered. The digital image is preferably rendered on a display, such as the video display 214. The digital image is preferably extracted from a database of images which is stored on the hard disk drive 214 or accessed via the computer network 220. The process continues at the next step 109, where one of the generated icons is selected by the user according to the content of the image. For example, if the image depicts a person called "Liza Hayward", then the icon associated with the name Liza Hayward can be selected. The icon is preferably selected by clicking on the appropriate icon using the mouse 203. The icon can preferably be dragged in a conventional manner using the mouse 203 and positioned over a desired subject of the image. Once the icon is positioned over the desired subject of the image, the user can de-select the mouse 203 in the conventional manner. This action is generally referred to as "dropping" the icon on the image. At the next step 111, the location at which the subject is rendered in the image is determined based on the initial placement of an icon on an image. Any known face or object detection method (e.g. colour region growing) can be used to detect where the subject is located in the image based on the location of the initial placement of the icon. In accordance with the preferred embodiment, a default sized bounding box (e.g. 503 of Fig. 5) is presented to the user based on the location of the initial placement of the icon such that the bounding box substantially surrounds the subject (e.g. Liza Hayward). The bounding box is preferably re-sizeable by the user using the mouse 203 in a conventional manner. In this manner, the user can alter the size of the bounding box to totally surround the selected subject or to cover only a portion of the subject. Preferably, more than one icon can be selected. Alternatively, the bounding box can be automatically resized to fit the selected subject. For example, if there is more than one person in the rendered image then another icon, which is associated with the name of the other person, can be selected, dragged and positioned over the other person, as discussed above. This will result in another default sized bounding box (e.g. 505 of Fig. 5) being positioned over the second subject, which can preferably be re-sized by the user, as discussed above. In another example, a person in the image can be standing with a mountain in the background. Therefore, after selecting the icon associated with the person's name, an icon associated with the metadata "mountain" can be selected and if desired a bounding box can be positioned adjacent to the mountain.

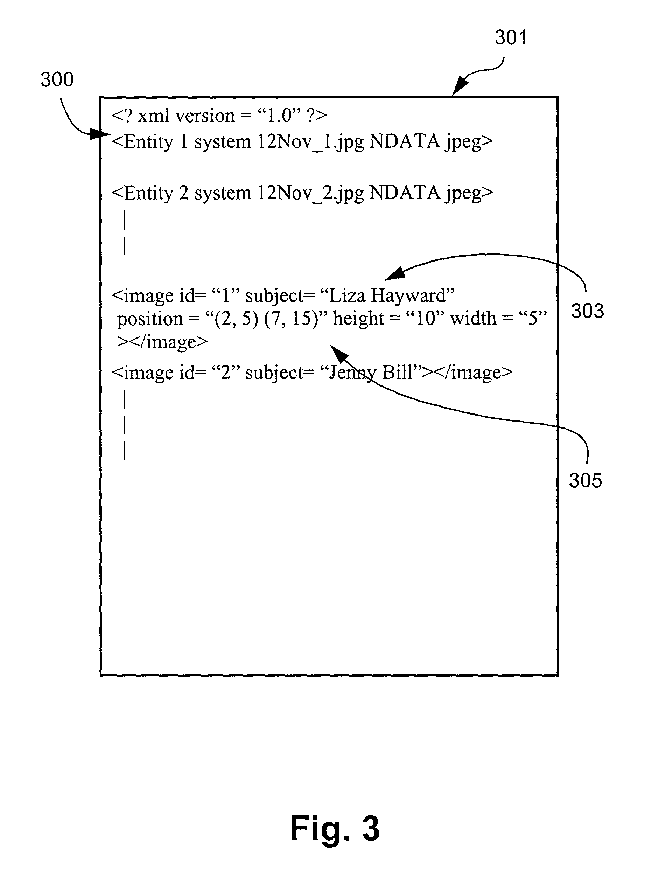

At the next step 113, the metadata (e.g. the name "Liza Hayward") associated with the selected icons is stored as an association list, in a storage device such as the hard disk drive 210, and linked to the rendered image. The position (x,y) and size (width, height) of the bounding box (e.g. 503), associated with the subject, are also stored in the association list, as at step 113, such that the metadata and bounding box information are linked together. Alternatively, two opposite co-ordinate points indicating the size of the bounding box can be stored in the association list. Therefore, the bounding box information (i.e. position, height and width) indicates the location and size of the subject within the rendered digital image. The association list preferably includes a tag indicating an association with the rendered image. For example, the list could include the file name (e.g. 12Nov_1.jpg) of the corresponding image file for the rendered image. Preferably the association list is an Extensible Mark-up Language (XML) file, stored on a hard disk drive, such as the hard disk drive 210. *XML* is a computer language used for associating metadata with images. An example of the format of an *XML* file 301 is shown in Fig. 3. As seen in Fig. 3, the *XML* file includes the file name 300 of an image file, the metadata 303, and bounding box information 305 associated with the image file. In a further implementation, the metadata and bounding box positional information associated with the selected subject can be stored as part of the image file. For example, the .TIF image format allows metadata to be stored as part of the image file.

The process continues at step 115, where a decision is made as to whether any more images require annotation. If more images require annotation, then the process returns to step 107, where another image is rendered. The process concludes when all of the images requiring annotation have been annotated.

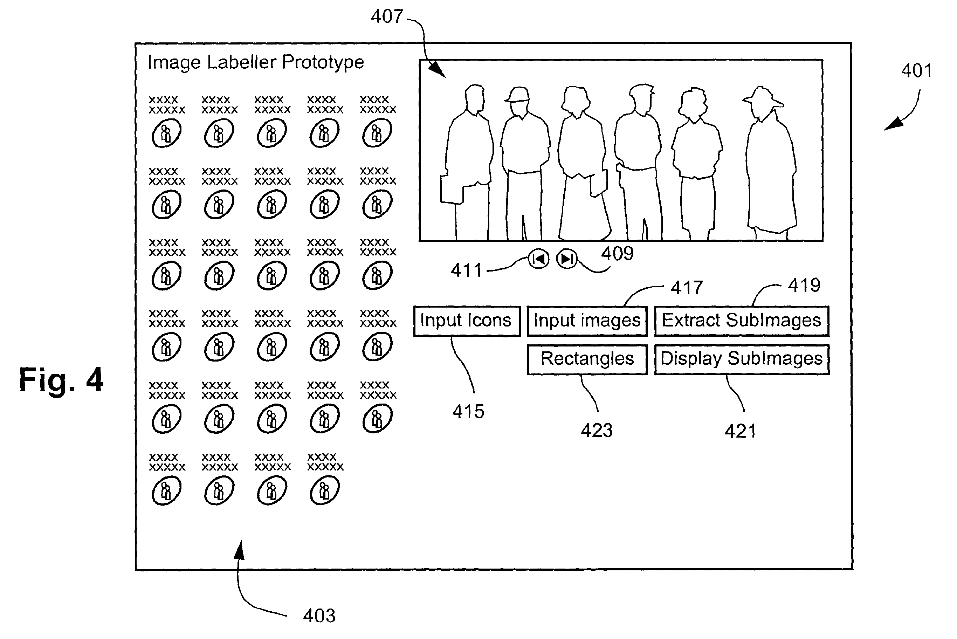

Fig. 4 shows a preferred user interface 401 that can be used to perform the method shown in Fig. 1. The preferred user interface 401 includes an icon 415 labelled "Input Icon" which can be selected in order to enable the user to generate a database of metadata labels, as at step 101 of the method, by importing a pre-existing database from the computer network 220 or another application. The preferred user interface 401 also includes an icon 417 labelled "Import Images" which can be selected in order to enable the user to access the digital images to be rendered. The user can preferably import the digital images from a pre-existing database which is stored on the hard disk drive 214 or accessed via the computer network 220 or another application. The user interface 401 also includes a series of icons 403, which are generated as at step 103 of the method. One of the icons 403 can be selected, as at step 109 of the method, in order to associate the selected icon with a rendered image. The number of generated icons 403 is preferably equal to the number of metadata labels in the generated database, which has been previously imported or created by the user. The user interface 401 also includes a frame 407 for rendering the images that the user wishes to annotate. A forward and reverse button 409 and 411, respectively, are provided below the frame 407 to enable the user to successively render all of the images included on the database by selecting either forward or reverse with the mouse 203 in a conventional manner.

In accordance with a further embodiment, the user interface 401 includes three icons 419, 421 and 423 labelled "Extract Sub-images", "Display Sub-images" and "Rectangles", respectively. The user can select the icon 419 labelled "Extract Sub-images" resulting in an image being extracted from the rendered image, based on a bounding box which has been dropped on the rendered image using the method of Fig. 1. Also, upon selecting the icon 419 labelled "Extract Sub-images", the bounding box information (i.e. position, height and width) associated with the bounding box is stored in the association list together with the metadata associated with the subject overlayed by the bounding box. After being extracted, the image in the bounding box can preferably be stored as an image file (e.g .jpg or .tif) in the semiconductor memory 206. For example, an image, depicting Liza Hayward, based on the bounding box positioned over Liza Hayward in the rendered image, is extracted and stored in the semiconductor memory 206, and the position and size of the bounding box are stored in the association list together with the metadata associated with Liza Hayward, upon the user selecting the icon 419 labelled "Extract Sub-images". As can be seen in Fig. 5, three bounding boxes 501, 503 and 505 have been displayed on the image being rendered in the frame 407 of the user interface 401 when the user selects the icon 421 labelled "Display Sub-images". The user can then select the icon 421 labelled "Display Sub-images" which results in the extracted image being displayed on the user interface 401. A user has then selected the icon 419 labelled "Extract Sub-images" followed by the icon 421 labelled "Display Sub-images" which has resulted in three images 507, 509 and 511 being displayed on the user interface 401 based on the bounding boxes 501, 503 and 505. The process of extracting the sub-images in accordance with the further embodiment at steps 109, 111 and 113 can be carried out sequentially or concurrently after dropping the selected icon 403.

Selecting the icon 423 labelled "Rectangles" preferably results in the bounding boxes (e.g. 501, 503 and 505) being removed from the rendered image. However, the selection of the icon 423 does not result in the removal of previously stored bounding box information and metadata associated with the image. Re-selecting the icon 423 preferably results in the display of all bounding boxes that have previously been associated with an image. For example, if a user selects the forward button 409 and the image displayed in Fig. 4 is selected from a database of images and rendered in the frame 407, then a user can select the icon 423 resulting in all previously stored bounding boxes (e.g. 501, 503, and 505) being displayed. Re-selecting the icon 423 preferably results in the bounding boxes being removed from the image. However, the associated bounding box information and metadata previously stored in the association list associated with the image will not be affected.

In accordance with a still further embodiment of the present invention, once bounding box positional information and metadata have been stored for an image, pointing to a subject in the image with a mouse pointer (not illustrated) in a conventional manner will result in the metadata associated with the subject being displayed. As seen in Fig. 5, a user has selected Liza Hayward with the mouse pointer after the bounding box 503 has been dropped onto the image, resulting in the display of the "tip" 515 including Liza Hayward's name.

In accordance with a still further embodiment of the present invention, the user interface 401 can include a "content" button (not illustrated) and a "like to send" button (not illustrated). The content button can be selected by a user before selecting one of the icons 403 in order to indicate that the icon to be subsequently selected will be referring to the content of the image. Alternatively, the user can select the like to send button in order to indicate that the content of the image will be of interest to a selected person. The icon subsequently selected, after selecting the like to send button, will be associated with the name of the person to whom the user wishes to send the image. Selecting the content button preferably results in a tag (not illustrated) being included in the association list stored at step 113, indicating that the metadata associated with the subsequently selected icon refers to the content of the image. Similarly, selecting the like to send button preferably results in a tag (not illustrated) being included in the association list stored at step 113, indicating that the metadata associated with the subsequently selected icon refers to a person to whom the user wants to send the image to.

The icons that are provided at step 103 of the preferred method, are preferably default icons having a generic indicator displayed in them. For example, stick figures depicting generic people can be displayed in the default icons, as seen in Figs. 4 and 5. However, in accordance with the preferred embodiment, if the image rendered at step 107 is subsequently only associated with one subject at step 109, then the icon used to indicate the association can have the generic indicator replaced by a scaled and/or cropped version of the rendered image. For example, if the rendered image depicts a person Jenny and the icon associated with the metadata "Jenny" is subsequently selected, then the generic indicator of the selected icon can be replaced with a scaled and/or cropped version of the image depicting Jenny. Alternatively, the extracted image resulting from a bounding box being dropped onto Jenny in an image can be depicted in the icon associated with the metadata "Jenny". Replacing the default icons with images improves the user friendliness of the icons 403.

In accordance with still a further embodiment of the present invention, the icons provided at step 103 can have e-mail addresses associated with them at step 105. In this case, the database of metadata labels, created or imported by the user at step 101, includes an e-mail address associated with each name included in the database. When an icon is subsequently selected, at step 109 of the method, the metadata associated with the selected icon, describing the person's name and e-mail address, is stored in the association list at step 113 of the method. Subsequently, if a user wishes to e-mail a number of image files to another person, the e-mail application can search through the association lists associated with each image file annotated by the user and then send the appropriate images to the person. For example, the e-mail application can search through the association lists and send all of the images that have the metadata "Jenny" associated with them using Jenny's e-mail address. In a further example, if several of the lists have been tagged as "like to send", as described above, then the e-mail application can select those images and e-mail them to the address of the person indicated by the metadata included in the association lists associated with those images.

Once an image or document has been annotated using the method, a user can perform any number of functions with the annotated material. For example, a user can collate a number of annotated images for printing or faxing. Further, a number of annotated images can be displayed in sequence based on the content of the images. Still further, the annotation can facilitate in later searching for and recovering the image. Still further, the annotation can facilitate in the automatic presentation of images allowing a user to zoom in on a subject of interest. Still further, the annotation can facilitate in the generation of "tool tips" such that when a user does a conventional mouse roll-over of an annotated image, an unknown person in the image can be identified by pointing the mouse pointer at that person. Still further, the extraction and display of images in accordance with the preferred implementation can be used to subdivide and/or mosaic an image.

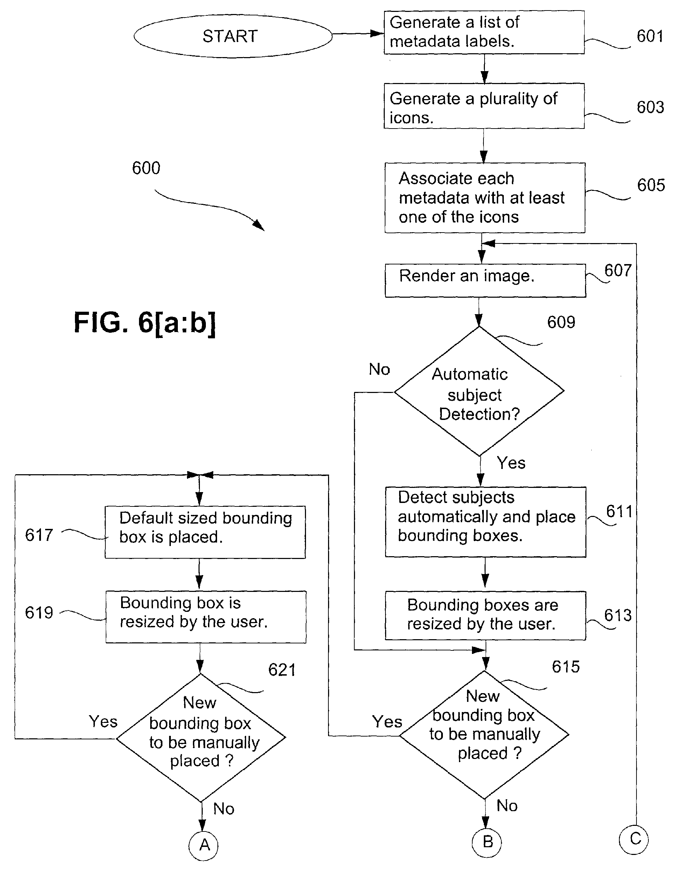

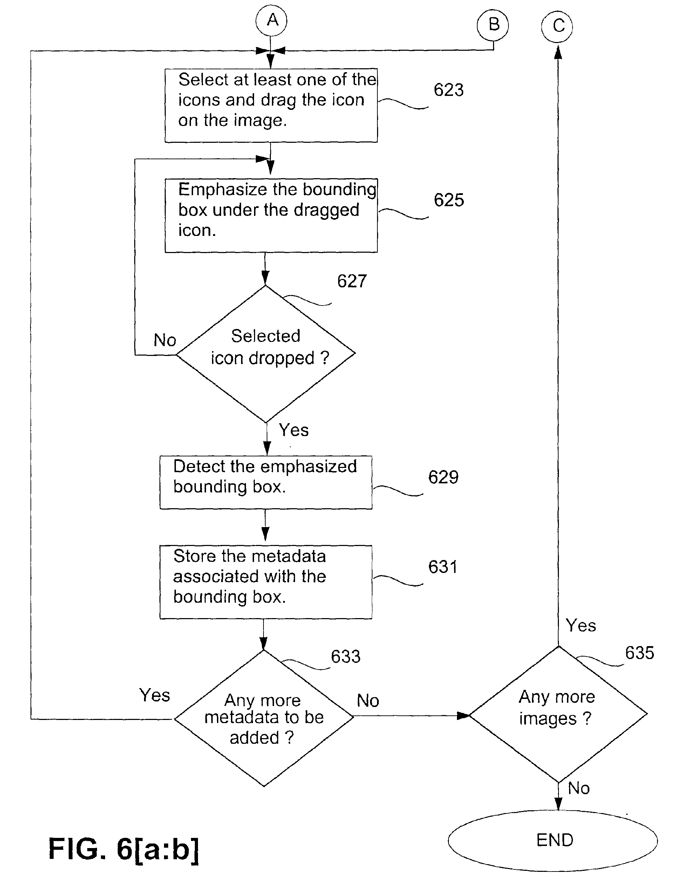

Fig. 6 is a flow diagram 600 showing a method of annotating an image using metadata, in accordance with a still further embodiment of the present invention. The process of flow chart 600 begins at step 601, where a list of metadata labels is provided. The list of metadata labels is preferably provided automatically. For example, as discussed above, a list of people's names can be automatically provided by extracting the names from an existing database of names, such as an e-mail address book. In this instance, names, associated e-mail addresses and other personal information can be extracted from the database. Alternatively, a list of metadata labels can be manually generated using any known software database application, or metadata labels can be manually inputted by the user using the keyboard 202. At the next step 603, a plurality of icons are provided. Preferably, the number of icons is equal to the number of metadata labels in the list of metadata labels and the icons are preferably displayed on the video display 214. The process continues at the next step 605, where each label in the list of metadata labels is associated with at least one of the generated icons, similarly to step 105 of Fig. 1, as discussed above.

At the next step 607, a digital image is rendered on the display 214. The process continues at the next step 609, where a user can select that one or more subjects from the rendered image be automatically detected. If automatic detection is selected at step 609, then the process of flow chart 600 proceeds to step 611. Otherwise, the process proceeds directly to step 615. At step 611, subjects of the rendered image are automatically detected, using any known image detection method. For example, face detection or object detection can be performed using the colour information of the image. In accordance with one embodiment, the distribution of human face patterns within an image can be modelled by means of view-based "face" and "non-face" prototypes. At each location in the image, a difference feature vector can be computed between the image pattern and the distribution model for the image. A human face can then be detected at a particular location in the image based on the difference feature vector computed for that particular location. One such face detection method is described in the article by Kah-Kay Sung and Tomaso Poggio, entitled "Example-based Learning for View-based Human Face Detection", A.I. Memo No. 1521, C.B.C.L. Paper No. 112, Artificial Intelligence Laboratory, Massachusetts Institute of Technology, 1994. Also at step 611, rectangles (i.e. bounding boxes) surrounding the detected subjects, are automatically displayed on the image. At the next step 613, the rectangles displayed at step 611 are adjusted to fit the detected subjects. The rectangles are preferably adjusted by being re-sized, moved or erased by the user using the keyboard 202 and/or the mouse 203 in a conventional manner.

The process of flow chart 600 continues at the next step 615, where if the user wishes to manually place a rectangle on the image with respect to any particular selected subject of the image, the process proceeds to step 617. Otherwise, the process proceeds directly to step 623. At step 617, a default sized rectangle (e.g. 503 of Fig. 5) is placed over the selected subject. The process continues at the next step 619, where the default sized rectangle is adjusted by being re-sized, moved or erased by the user. At the next step 621, if the user wishes to manually place any further rectangles on the image with respect to any particularly selected subject of the image, the process returns to step 617. Otherwise, the process proceeds to step 623.

At step 623, at least one of the plurality of icons provided at the step 603, is selected by the user according to the content of the image, and the selected icon is dragged onto the image using the mouse 203 in a conventional manner. At the next step 625, the rectangle surrounding the selected subject is automatically emphasized when the dragged icon is positioned over the selected subject. The rectangle is preferably emphasized by changing its colour or brightness. At the next step 627, if the selected icon has been dropped onto the image with respect to the selected subject then the process proceeds to step 629. At step 629, the emphasized rectangle at the location where the icon is dropped, is detected. The process continues at the next step 631, where metadata associated with the dropped icon is stored as an association list in a similar manner to that discussed above with reference to step 113 of flow chart 100. Preferably, two opposite coordinate points of the emphasized rectangle are stored with the metadata in the association list. At the next step 633, if the user wishes to add another icon and associated metadata to the image, then the process returns to step 623. Otherwise, the process proceeds to the next step 635, where if there are more images requiring annotation, then the process returns to step 607, where another image is rendered. The process concludes when all of the images requiring annotation have been annotated.

The aforementioned methods comprise particular control flows. There are many other variants of the methods which use different control flows without departing the spirit or scope of the invention. Furthermore one or more of the steps of the methods can be performed in parallel rather than sequentially.

The foregoing describes only some embodiments of the present invention, and modifications and/or changes can be made thereto without departing from the scope and spirit of the invention, the embodiments being illustrative and not restrictive. In accordance with a still further embodiment of the present invention, based on the initial placement of an icon on an image, any known face or object detection method can be utilised to detect where the subject associated with the icon is in the image. Processing can then be carried out, using any known segmentation method, to extract an exact spline outline of the subject resulting in positional information being stored for the image, as discussed above.

In accordance with the still further embodiment, the bounding box, discussed above, can comprise any number of edges.

Further, the computer program for carrying out the method of the embodiments can be obtained in electronic form for example by downloading the code over a network such as the internet. Thus in accordance with another aspect of the present invention there is provided an electrical signal carrying processor implementable instructions for controlling a processor to carry out the method as hereinbefore described.

## Claims

1. A method of annotating an image, said method comprising the steps of:
displaying the image and a plurality of icons, each icon being associated with metadata;
selecting at least one of said icons depending on at least one subject of the image; and
storing the metadata associated with said selected icon as an annotation of the subject of the image.

2. A method according to claim 1, wherein said selecting step comprises the substeps of:
selecting at least one of said icons depending on said at least one subject of the image;
dragging the selected icon to the image;
dropping the dragged icon on the subject of the image; and
detecting the subject based on the position at which the icon is dropped, wherein said storing step stores the metadata associated with the dropped icon as an annotation of the subject of the image.

3. A method according to claim 2, wherein said detecting step extracts the subject from the image based on the dropped position when the dragged icon is dropped on the image.

4. A method according to claim 3, wherein said subject is extracted based on the colour information of the dropped position.

5. A method according to claim 3, wherein said detecting step extracts a predetermined sized region of the subject based on the dropped position and said storing step stores the metadata associated with the dropped icon as an annotation of the region of the subject.

6. A method according to claim 2, further comprising the step of constructing regions about locations at which said subject is rendered in said image.

7. A method according to claim 6, wherein said detecting step detects one of the regions of the subject based on the position at which the icon is dropped, and said storing step stores the metadata associated with the dropped icon as an annotation of the detected region of the subject in the image.

8. A method according to claim 6, wherein said dragging step further comprises the steps of:
dragging the selected icon to the image; and
emphasizing the region under the dragged icon.

9. A method according to claim 1, further comprising the step of constructing a bounding box about locations at which said subject is rendered in said image.

10. A method according to claim 9, further comprising the step of storing the location of said bounding box.

11. A method according to claim 9, further comprising the step of extracting a part of said image based on the bounding box.

12. A method according to claim 11, further comprising the step of displaying the extracted part of said image.

13. A method according to claim 9, wherein a size of said bounding box is determined automatically.

14. A method according to claim 9, wherein a size of said bounding box is changeable by a user.

15. A method according to claim 1, wherein said metadata as the annotation of the subject is displayed upon selecting said subject in the image.

16. A method according to claim 1, further comprising the steps of:
providing a list of metadata; and
associating the list of metadata and the plurality of icons.

17. A method according to claim 16, wherein said list of metadata is provided from a database.

18. A method according to claim 1, wherein said storing step stores the metadata as the annotation of the subject of the image by using a tag indicating an association with said image.

19. A method according to claim 18, wherein the metadata associated with the subject of the image is stored in an XML file.

20. A method according to claim 1, further comprising the step of e-mailing at least the image to at least one e-mail address based on the metadata associated with the image.

21. A method according to claim 1, further comprising the step of replacing the default icon by the icon generated based on the subject of the image.

22. A computer program for a computer, comprising software code portions for performing the steps of any one of claims 1 to 21.

23. A computer readable medium storing a computer program, wherein said computer program comprises software code portions for performing the steps of any one of claims 1 to 21.

24. An apparatus for annotating an image, said apparatus comprising:
display means for displaying the image and a plurality of icons, each icon being associated with metadata;
selection means for selecting at least one of said icons depending on at least one subject of the image; and
storage means for storing the metadata associated with said selected icon as an annotation of the subject of the image.

25. The apparatus according to claim 24, further comprising:
means for dragging the selected icon to the image and dropping the dragged icon on the subject of the image; and
detection means for detecting the subject based on the position at which the icon is dropped, wherein said storage means stores the metadata associated with the dropped icon as an annotation of the subject of the image.

26. The apparatus according to claim 25, wherein said detection means extracts the subject from the image based on the dropped position when the dragged icon is dropped on the image.

27. The apparatus according to claim 26, wherein said subject is extracted based on the colour information of the dropped position.

28. The apparatus according to claim 25, wherein said detection means extracts a predetermined sized region of the subject based on the dropped position and said storage means stores the metadata associated with the dropped icon as an annotation of the region of the subject.

29. The apparatus according to claim 25, further comprising means for constructing regions about locations at which said subject is rendered in said image.

30. The apparatus according to claim 29, wherein said detection means detects one of the regions of the subject based on the position at which the icon is dropped, and said storage means stores the metadata associated with the dropped icon as an annotation of the detected region of the subject in the image.

31. The apparatus according to claim 29, wherein a region under a dragged icon is emphasized.

32. The apparatus according to claim 25, further comprising means for constructing a bounding box about locations at which said subject is rendered in said image.

33. The apparatus according to claim 32, wherein said storage means further stores the location of said bounding box.

34. The apparatus according to claim 32, further comprising means for extracting a part of said image based on the bounding box.

35. The apparatus according to claim 34, wherein said display means further displays the extracted part of said image.

36. The apparatus according to claim 32, wherein a size of said bounding box is determined automatically.

37. The apparatus according to claim 32, wherein a size of said bounding box is changeable by a user.

38. The apparatus according to claim 24, wherein said metadata as the annotation of the subject is displayed upon selecting said subject in the image.

39. The apparatus according to claim 24, further comprising:
means for providing a list of metadata; and
association means for associating the list of metadata and the plurality of icons.

40. The apparatus according to claim 39, wherein said list of metadata is provided from a database.

41. The apparatus according to claim 24, wherein said storage means stores the metadata as the annotation of the subject of the image by using a tag indicating an association with said image.

42. The apparatus according to claim 41, wherein the metadata associated with the subject of the image is stored in an XML file.

43. The apparatus according to claim 24, further comprising means for e-mailing at least the image to at least one e-mail address based on the metadata associated with the image.

44. The apparatus according to claim 24, further comprising means for replacing the default icon by the icon generated based on the subject of the image.

45. A method as claimed in any of claims 1 to 21 wherein all of the steps recited therein are performed by a computer.

46. A datastructure comprising image files, and respective metadata, icon information and bounding box information associated therewith.

47. An electrical signal comprising processor implementable instructions for carrying out a method as claimed in any one of claims 1 to 21.

48. A user interface for a computer system comprising icons associated with respective image files and with respective metadata, wherein selection of an icon selects the respective image file for processing in accordance with the respective metadata.
